# EUROPÄISCHE PATENTSCHRIFT

(11) **EP 4 320 328 B1**
(45) Veröffentlichungstag und Bekanntmachung des Hinweises auf die Patenterteilung: **06.08.2025**
(21) Anmeldenummer: 22733016.4
(22) Anmeldetag: 08.06.2022
(51) Int. Cl.: E05F 11/38, E05F 15/689

(54) **FENSTERHEBER FÜR EIN KRAFTFAHRZEUG**
WINDOW LIFTER FOR A MOTOR VEHICLE
LÈVE-VITRE POUR UN VÉHICULE AUTOMOBILE

(30) Priorität: 08.06.2021 DE 102021205768
(43) Veröffentlichungstag der Anmeldung: 14.02.2024
(73) Patentinhaber: Brose Fahrzeugteile SE & Co. Kommanditgesellschaft, Bamberg, 96052 Bamberg (DE)
(72) Erfinder: DOHLES, Hilmar, 96274 Itzgrund (DE); QUIN, Florian, 96179 Rattelsdorf (DE); TAUBMANN, Udo, 96476 Bad Rodach - Sülzfeld (DE); WOLF, Doris, 96472 Rödental (DE)
(74) Vertreter: FDST Patentanwälte
(86) Internationale Anmeldenummer: PCT/EP2022/065547
(87) Internationale Veröffentlichungsnummer: WO 2022/258685

(56) Entgegenhaltungen:
- US-A1- 2014 157 677

## Beschreibung

Die Erfindung betrifft einen Fensterheber für ein Kraftfahrzeug, aufweisend eine Kunststoffkomponente und eine Metallkomponente, wobei die Kunststoffkomponente an einer Anlagefläche zumindest abschnittsweise in einem mechanischen Berührungskontakt mit einer Metallkomponente ist. Die Erfindung betrifft weiterhin ein Türmodul mit einem solchen Fensterheber sowie eine Verwendung von Mikrokapseln in einem Kunststoffgranulat.

Bewegbare Fahrzeugfensterscheiben werden heute üblicherweise durch elektrisch oder elektromotorisch betriebene Stellvorrichtungen als (Fahrzeug-)Fensterheber zwischen einer Schließstellung und einer Öffnungsstellung verfahren. Ein solcher Fensterheber umfasst in der Regel einen (elektrischen) Stellmotor sowie eine den Stellmotor mit der Fensterscheibe verbindende, dies bedeutet kraftübertragungstechnisch koppelnde, Stellmechanik auf. Zur Montage des Fensterhebers in einer Fahrzeugtür ist es möglich, den Fensterplatte auf einer Trägerplatte, auch Türmodulträger oder Aggregatträger genannt, vorzumontieren. Die Baueinheit aus Fensterheber und Türmodulträger (und gegebenenfalls weiterer Funktionselemente der Fahrzeugtür) ist nachfolgend auch als Türmodul bezeichnet.

Die Stellmechanik eines derartigen Fensterhebers weist beispielsweise einen Seilzugmechanismus auf, welcher einerseits in einer diesen auf- und abwickelnden Seiltrommel sowie andererseits unter mehrfacher Umlenkung mittels (Seil-) Umlenkrollen an einen Mitnehmer oder Schienengleiter geführt und dort fixiert ist. Zur Führung der Fensterscheibe ist diese bei einer Fahrzeugtür beispielsweise an einer vorderen und/oder hinteren seitlichen Fensterkante mit mindestens einem Schienengleiter als Scheibenführungselement versehen, welcher in mindestens einer als Verstell- oder Führungsbahn wirkenden Führungsschiene der Stellmechanik verschiebebeweglich entlang der Fahrzeughöhe (Z-Richtung) geführt ist.

Schienengleiter der vorstehend genannten Art weisen in der Regel einen aus Kunststoff gefertigten Grundkörper mit einem Führungsbereich auf, welcher im Montagezustand als Schienenumgriff die Führungsschiene umgreift. Mit anderen Worten sitzt die Führungsschiene in dem Führungsbereich ein. Der Grundkörper und die Führungsschiene sind somit im Eingriff miteinander. Der Grundkörper ist im Eingriff verschiebebeweglich entlang der Führungsschiene gelagert, so dass die Fensterscheibe zwischen der Schließstellung und der Öffnungsstellung linear geführt ist.

Die Stellmechanik derartiger Fensterheber weist somit eine Vielzahl von gegeneinander bewegbaren Komponenten auf. Die Komponenten sind hierbei zur Kosten und Gewichtsreduzierung beispielsweise als Kunststoffteile ausgeführt. Bei beweglichen Kunststoffteilen sind hohe Reibungskräfte eine häufige Ursache für Schäden. Zur Lebensdauerverlängerung derartiger Kunststoffteile ist daher eine Reibungsminderung und ein Verschleißschutz wünschenswert. Zu diesem Zwecke werden die Anlageflächen zwischen den beweglichen Komponenten regelmäßig mit einem Schmier- oder Gleitstoff benetzt.

Die Schmierstoffe werden hierbei in Trockenschmierstoffe und flüssige oder pastöse Schmierstoffe unterschieden. Trockenschmierstoffe oder Festschmierstoffe, wie beispielsweise Pulverbeschichtungen aus Graphit oder Keramik, ermöglichen eine vergleichsweise einfache Einarbeitung in Kunststoffe, jedoch weisen Trockenschmierstoffe lediglich eine eingeschränkte Materialvielfalt auf. Daher werden häufig flüssige, viskose oder pastöse Schmierstoffe, wie beispielsweise Schmieröle oder Schmierfette verwendet, welche eine größere Materialvielfalt und verbesserte Verteilungs- oder Benetzungseigenschaften aufweisen. Des Weiteren ermöglichen die Mikrokapseln einen speziellen Einsatz von hochwirksamen Fetten, wie beispielsweise Silikon.

Beispielsweise ist der Schienengleiter beziehungsweise dessen Grundkörper als ein Spritzgussteil ausgeführt, wobei die Führungsschiene eine Metallschiene, beispielsweise aus Aluminium ist. Die Führungsschiene ist hierbei beispielsweise pulverbeschichtet oder verzinkt. Zur Verbesserung der Gleiteigenschaften ist häufig ein Gleiteinsatz aus Polyamid (PA) oder Polyoxymethylen (POM) in den Schienenumgriff des Schienengleiters eingesetzt. Zwischen dem Schienengleiter und der Führungsschiene ist eine translatorische oder gleitende Schnittstelle gebildet, wobei zwischen die Pulverbeschichtung (Pulverlack) und den Gleiteinsatz in der Regel zusätzlich noch ein Schmierfett (beispielsweise FK 3) eingebracht ist.

Ein weiteres Beispiel ist eine aus POM hergestellte Umlenkrolle, welche mittels eines metallischen Bolzens drehbar oder rotierbar an dem Türmodul gelagert ist. Die rotierende Schnittstelle zwischen Bolzen und Umlenkrolle ist hierbei häufig mit einem Schmierfett benetzt.

Schmierfette oder Schmieröle erfordern nachteiligerweise eine externe Dosierung und weisen einen vergleichsweise hohen Verbrauch auf. Des Weiteren ist der Aufwand zur Aufbringung von flüssigen Schmierstoffen höher als bei Trockenschmierstoffen. Des Weiteren kann eine falsche oder vergessene Anwendung von flüssigen oder pastösen Schmierstoffen zu einer Beschädigung oder Zerstörung der beteiligten Komponenten führen, wodurch die Qualität des Fensterhebers nachteilig reduziert wird.

Aus der US 2014/157677 A1 ist ein Fensterheber für ein Kraftfahrzeug bekannt, bei welchem eine Matrixbeschichtung auf einen Metallrohling aufgebracht wird. Die Matrixbeschichtung besteht aus Teilchen eines Fluorpolymers (wie Polytetrafluorethylen), die in einem organischen Polymerbindemittel enthalten sind. Der beschichtete Metallrohling wird kalt in die Form einer Führungsschiene mit einer entlang einer Kante der Führungsschiene angeordneten Längsspur verformt. Auf der Führungsschiene ist ein Fensterschieber montiert, der entlang der Längsspur gleitet, so dass die Fluorpolymerteilchen das Gleiten des Fensterschiebers auf der Längsspur schmieren.

Der Erfindung liegt die Aufgabe zugrunde, einen besonders geeigneten Fensterheber für ein Kraftfahrzeug anzugeben. Insbesondere soll eine möglichst aufwandreduzierte und zuverlässige Schmierung der Stellmechanik gewährleistet sein. Der Erfindung liegt weiterhin die Aufgabe zugrunde, ein besonders geeignetes Türmodul sowie eine besonders geeignete Verwendung anzugeben.

Hinsichtlich des Fensterhebers wird die Aufgabe mit den Merkmalen des Anspruchs 1 und hinsichtlich des Türmoduls mit den Merkmalen des Anspruchs 13 sowie hinsichtlich der Verwendung mit den Merkmalen des Anspruchs 14 erfindungsgemäß gelöst. Vorteilhafte Ausgestaltungen und Weiterbildungen sind Gegenstand der Unteransprüche. Die im Hinblick auf den Fensterheber angeführten Vorteile und Ausgestaltungen sind sinngemäß auch auf das Türmodul und/oder die Verwendung übertragbar und umgekehrt.

Der erfindungsgemäße Fensterheber ist für ein Kraftfahrzeug vorgesehen, sowie dafür geeignet und eingerichtet. Der Fensterheber weist einen elektrischen Stellmotor und eine damit gekoppelte Stellmechanik auf.

Die Stellmechanik weist eine Kunststoffkomponente und eine Metallkomponente auf, welche gegeneinander beweglich sind, und zwischen welchen eine mechanische Schnittstelle gebildet ist. Die Kunststoffkomponente ist beispielsweise als ein Spritzgussteil ausgeführt. Die Kunststoffkomponente weist hierbei eine Anlagefläche als mechanische oder reibbeanspruchte Schnittstelle zu der Metallkomponente auf, an welcher die Kunststoffkomponente und die Metallkomponente zumindest abschnittsweise in einem mechanischen Berührungskontakt sind.

Erfindungsgemäß sind zumindest in dem Bereich der Anlagefläche Mikrokapseln (Mikroblasen) in das Kunststoffmaterial der Anlagefläche eingebettet, welche mit einem Schmierstoff gefüllt sind. Die Mikrokapseln sind hierbei beispielsweise an der Oberfläche oder oberflächennah in das Material der Anlagefläche eingebracht. Unter einem Schmierstoff ist hierbei insbesondere ein pastöser oder flüssiger Schmierstoff zu verstehen. Mit anderen Worten ist ein flüssiger oder pastöser Schmierstoff, wie beispielsweise ein Schmierfett oder Schmieröl, mittels einer Mikroverkapselung einschlussimmobilisiert und in die Anlagefläche der Kunststoffkomponente integriert. Dadurch ist ein besonders geeigneter Fensterheber realisiert.

Das erfindungsgemäße Schmierungskonzept ermöglicht eine lokale, bedarfsweise Schmierung der Komponenten zur Reibungsminderung und Verschleißschutz, wodurch insbesondere der Kunststoffkomponente verbessert wird. Insbesondere ermöglichen die Schmierstoff-Mikrokapseln eine dauerhafte Reibungsminimierung der Kunststoffkomponente. Dies überträgt sich in der Folge vorteilhaft auf die Lebensdauer des Fensterhebers, wodurch Wartungs- und Reparaturarbeiten reduziert werden.

Durch die Schmierstoff-Mikrokapseln ist eine Einsparung von Trockenschmierstoffen, wie beispielsweise Pulverlack, ermöglicht. Des Weiteren kann die Mikroverkapselung aufwandsreduziert in eine Automatisierungsanlage zur Herstellung der Kunststoffkomponente integriert werden. Weiterhin wird durch die Mikroverkapselung eine Qualitätsverbesserung des Fensterhebers ermöglicht, da der Schmierstoff nicht falsch angewendet oder vergessen werden kann. Insbesondere wird bei der Herstellung aufgrund des Schmierstoffentfalls ein CO₂-Ausstoß reduziert. Zusätzlich werden Auswaschungen minimiert oder vollständig eliminiert.

Die Mikroverkapselung des Schmierstoffs erfolgt hierbei insbesondere nach Art einer Kern-Hülle-Verkapselung, bei welchem der Schmierstoff (Kernmaterial) von einem Hüllmaterial, insbesondere einem Kunststoffmaterial, umhüllt ist. Die Mikrokapseln weisen hierbei beispielsweise einen Durchmesser von einigen Millimetern bis etwa 1 µm (Mikrometer) auf. Je nach Kernmaterial und Hüllmaterial beträgt der Mikrokapseldurchmesser beispielsweise zwischen 5 µm und 100 µm

Die Mikroverkapselung ist hierbei derart ausgeführt, dass sie bei einer hinreichend hohen mechanischen Beanspruchung öffnet, und den darin eingeschlossenen Schmierstoff freigibt. Unter einem "Öffnen" der Mikrokapseln ist hierbei insbesondere ein Bruch des Hüllmaterials zu verstehen, bei welchem der Schmierstoff in der Regel in kurzer Zeit vollständig freigesetzt wird (Burst). Welche Beanspruchung hierbei als hinreichend angesehen wird, ist zunächst nebensächlich. Insbesondere kann die Beanspruchung, ab welcher die Mikrokapseln öffnen, durch eine geeignete Materialwahl der Verkapselung beziehungsweise durch Variation des Kapseldurchmessers (Volumen des Kernmaterials) und/oder der Kapselwandstärke (Kapselwanddicke, Wandmaterialdicke) der Mikrokapseln vorgegeben werden. Dies ist beispielsweise mittels Erprobungen und Versuchen für die jeweilige Anwendung der Komponenten bestimmbar.

Da die Mikroverkapselung insbesondere im Bereich der Anlagefläche beziehungsweise der mechanischen Schnitt- oder Reibstelle angeordnet ist, verteilt sich der Schmierstoff beim Öffnen der Mikrokapseln lokal oder punktuell an den mechanisch beanspruchten Stellen, so dass eine zuverlässige Schmierung der Komponenten gewährleistet ist. Die Mikroverkapselung ermöglicht somit vorteilhafterweise eine Schmierstoffabgabe nur bei Bedarf und in geringen Konzentrationen.

Durch die Mikroverkapselung ist der flüssige oder pastöse Schmierstoff als ein fein verteilter Feststoff (Pulver) in den Kunststoff der Kunststoffkomponente einbringbar. Dadurch werden die Vorteile von Flüssig- und Trockenschmierstoffen effektiv miteinander kombiniert. Insbesondere ermöglichen die Mikrokapseln eine vergleichsweise einfache Einarbeitung in das Kunststoffmaterial, wobei gleichzeitig die größere Materialvielfalt und verbesserte Verteilungs- oder Benetzungseigenschaften des pastösen oder flüssigen Schmierstoffs genutzt werden können.

Die erfindungsgemäße Verwendung von mikroverkapselten Schmierstoff an der Schnittstelle ermöglicht eine Schmierung auch bei ansonsten schwer zugänglichen Bauteilen und Komponenten. Des Weiteren kann durch die direkt in die Kunststoffkomponente integrierte Mikroverkapselung auf Schmierstoffe, insbesondere auf Trockenschmierstoffe oder Pulverbeschichtungen, an der Metallkomponente verzichtet werden.

In einer geeigneten Ausgestaltung ist das Kunststoffmaterial der Kunststoffkomponente ein Polypropylen (PP), ein Polyoxymethylen (POM), oder ein Polyamid (PA), insbesondere Polyamid-6 (PA 6).

In einer zweckmäßigen Ausgestaltung beträgt der Anteil von Mikrokapseln in dem Kunststoffmaterial der Anlagefläche zwischen 1 Gew.-% (Gewichtsprozent) und 20 Gew.-%. Mit anderen Worten beträgt der Schmiermittelanteil in der Anlagefläche beispielsweise 1 Gew.-%, 5 Gew.-% oder 20 Gew.-%. Der Anteil kann hierbei flexibel an die jeweiligen Schmierungsanforderungen zwischen der Kunststoffkomponente und der Metallkomponente angepasst werden, so dass stets eine ausreichende und betriebssichere Schmierung der Komponenten beziehungsweise der Schnittstelle gewährleistet ist.

In einer denkbaren Ausgestaltung sind die Mikrokapseln, also insbesondere das Hüllmaterial, aus dem Kunststoffmaterial der Kunststoffkomponente beziehungsweise der Anlagefläche hergestellt. Dadurch ist eine zuverlässige Vermischung des Kunststoffmaterials der Anlagefläche und dem mikroverkapselten Schmierstoff gewährleistet. Beispielsweise ist das Kunststoffmaterial hierbei PA.

Das erfindungsgemäße Schmierungskonzept ist hierbei flexibel auf diverse Schnittstellen mit Kunststoffkomponenten oder Kunststoffteilen anwendbar. Beispielsweise kann der mikroverkapselte Schmierstoff bei (Kunststoff-)Zahnrädern eingesetzt werden. Weiterhin können die Schmierstoff-Mikrokapseln bei solchen Schnittstellen verwendet werden, bei welchen Standard-Schmierfette aufgrund von Verklebungen Probleme erzeugen.

Besonders vorteilhaft sind die Schmierstoff-Mikrokapseln bei gleitenden Schnittstellen, so dass beispielsweise Pulverbeschichtungen an (Führungs-)Schienen eingespart werden können. In einer vorteilhaften Anwendung ist die Kunststoffkomponente als ein Gleiteinsatz eines Schienenumgriffs eines Schienengleiters ausgeführt, wobei die korrespondierende Metallkomponente eine Führungsschiene zur linearen Führung des Schienengleiters ist, welche abschnittsweise von dem Schienenumgriff umgriffen oder eingefasst ist. Der Gleiteinsatz ist hierbei insbesondere aus PA oder POM hergestellt.

In einer ebenso vorteilhaften Anwendung ist die Kunststoffkomponente eine beispielsweise aus POM hergestellte (Seil-)Umlenkrolle, wobei die Metallkomponente ein die Umlenkrolle lagernder Bolzen ist. Der Bolzen ist hierbei beispielsweise an einem Türmodulträger im Bereich der Führungsschiene festgelegt. Dadurch ist eine geeignete Schmierung für die drehende Umlenkrolle gewährleistet.

In einer weiteren vorteilhaften Anwendung ist die Kunststoffkomponente als eine Seiltrommel ausgeführt, wobei die Metallkomponente ein darauf auf- und abwickelbares Seil, beispielsweise ein Stahlseil, ist.

In einer möglichen Ausführung sind die Mikrokapseln nicht lediglich in der Anlagefläche oder Grenzschicht lokalisiert, sondern sind in der gesamten Kunststoffkomponente verteilt angeordnet. Mit anderen Worten sind die Mikrokapseln in das gesamte Kunststoffmaterial der Kunststoffkomponente eingebettet. Bevorzugterweise sind die Mikrokapseln hierbei möglichst homogen verteilt beziehungsweise gleichverteilt im Kunststoffmaterial. Dies bedeutet, dass das Kunststoffmaterial im Wesentlichen eine konstante Dichte von Mikrokapseln im Bauteil- oder Komponentenvolumen aufweist. Dadurch weist das Kunststoffbauteil beziehungsweise das Kunststoffmaterial eine gleichmäßige Festigkeit oder mechanische Stabilität auf.

Zur Herstellung eines solchen Kunststoffmaterials mit gleichmäßig oder homogen verteilten ist es erfindungsgemäß beispielsweise möglich ein Kunststoffgranulat mit eingebetteten Mikrokapseln zu verwenden. Durch das Einbringen der Mikrokapseln in das Granulat wird sichergestellt, dass eine besonders gleichmäßige Verteilung der Mikrokapseln in der fertigen Kunststoffkomponente vorliegt. Insbesondere liegt somit bereits während der Herstellung des Kunststoffmaterials, also in einer Extruderschnecke beziehungsweise in einer Kunststoffschmelze, eine gleichmäßige Verteilung der Mikrokapseln vor. Durch die Verwendung von Kunststoffgranulat mit integrierten Mikrokapseln ist es somit möglich bereits vorhandene Spritzgussanlagen zur Herstellung der Kunststoffkomponente ohne Umrüstung oder Nachrüstung zu verwenden. Dadurch ist eine besonders einfache und kostengünstige Herstellung des Fensterhebers ermöglicht. Zweckmäßigerweise ist hierbei die Hülle der Mikroverkapselung, also insbesondere die Wandung oder Wanddicke der Mikrokapseln, derart dimensioniert, dass die Mikrokapseln nicht während der Herstellung der Kunststoffkomponente, also in der Schmelze oder im Extruder, öffnen.

Ein zusätzlicher oder weiterer Aspekt der Erfindung sieht vor, dass Mikrokapseln mit unterschiedlichen Kapseleigenschaften in das Kunststoffmaterial eingebettet sind. Unter einer Kapseleigenschaft ist hierbei insbesondere eine geometrische Eigenschaft der (Kapsel-)Hülle zu verstehen, also eine (Hüllen-)Form und/oder ein (Hüllen-)Durchmesser und/oder eine (Hüllen-)Wandstärke. Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können. Durch die unterschiedlichen Kapseleigenschaften sind effektiv unterschiedliche Druckstufen realisiert, ab welchen die Mikrokapseln öffnen und somit den Schmierstoff freisetzen. Dadurch ist in einfacher Weise eine Nachschmierlösung realisiert.

Bevorzugterweise ist ein Aktivator bei der Montage des Fensterhebers vorgesehen, welcher die Anlagefläche im Zuge der Montage bearbeitet und dadurch zumindest einen Teil der Mikrokapseln öffnet, so dass eine initiale oder anfängliche Schmierung für den Fensterheber realisiert ist.

In einer denkbaren Ausführung ist der Aktivator durch ein Aktivierungswerkzeug, beispielsweise einem Schneid- oder Schleifwerkzeug, insbesondere einem Schleifpapier, realisiert. Zusätzlich oder alternativ ist beispielsweise ein geometrischer Aktivator in Form einer Gegenkontur der Metallkomponente denkbar.

Die Gegenkontur kann hierbei beispielsweise nach Art eines Stempels ausgeführt sein, so dass bei einer Bewegung der Kunststoffkomponente in Richtung der Metallkomponente ein zunehmender Anlagedruck realisiert wird, welcher die Mikrokapseln in der Anlagefläche öffnet und somit die Lagerstelle schmiert. Alternativ kann die Gegenkontur beispielsweise als eine scharfkantige Kontur oder Grat ausgeführt sein, an welcher die Anlagefläche beim Einbau oder im Zuge der Montage gezielt bearbeitet wird.

Vorzugsweise ist die Gegenkontur als eine lokale Veränderung der Oberflächenbeschaffenheit, insbesondere der Oberflächenrauheit oder -rauigkeit, der Metallkomponente ausgeführt. Insbesondere weist die Metallkomponente im Bereich der Gegenkontur eine erhöhte Oberflächenrauheit auf. Der Bereich der Gegenkontur ist also rauer oder unebener als die restliche Metallkomponente.

Bei einer als Führungsschiene ausgeführten Metallkomponente ist die Gegenkontur beispielsweise im Bereich eines oberen und/oder unteren Endanschlags für die als Gleiteinsatz ausgeführte Kunststoffkomponente angeordnet. Wird die Kunststoffkomponente zum Endanschlag bewegt wird die Anlagefläche durch die Gegenkontur bearbeitet, so dass lokal eine größere mechanische Beanspruchung auf die Anlagefläche einwirkt, und somit die Mikrokapseln öffnen und den Schmierstoff freisetzen. Dadurch ist eine möglichst reibungsreduzierte Lagerung des Gleiteinsatzes zwischen den Endanschlägen möglich.

Das erfindungsgemäße Türmodul ist für ein Kraftfahrzeug, insbesondere für eine Seitentür des Kraftfahrzeugs, vorgesehen sowie dafür geeignet und eingerichtet. Das Türmodul weist einen Türmodulträger und einen darauf angeordneten, vorstehend beschriebenen, Fensterheber auf. Dadurch ist ein besonders geeignetes Türmodul realisiert.

Nachfolgend sind Ausführungsbeispiele der Erfindung anhand einer Zeichnung näher erläutert. Darin zeigen:
- Fig. 1: in schematischer und vereinfachter Darstellung ein Türmodul mit einem Fensterheber,
- Fig. 2: in schematischer und vereinfachter Darstellung eine Schnittstelle zwischen einer Kunststoffkomponente und einer Metallkomponente,
- Fig. 3: in perspektivischer Schnittansicht ausschnittsweise das Türmodul mit einer Seilumlenkrolle und mit einem Bolzen, und
- Fig. 4: in perspektivischer Schnittansicht einen Schienengleiter und eine Führungsschiene.

Einander entsprechende Teile und Größen sind in allen Figuren stets mit den gleichen Bezugszeichen versehen.

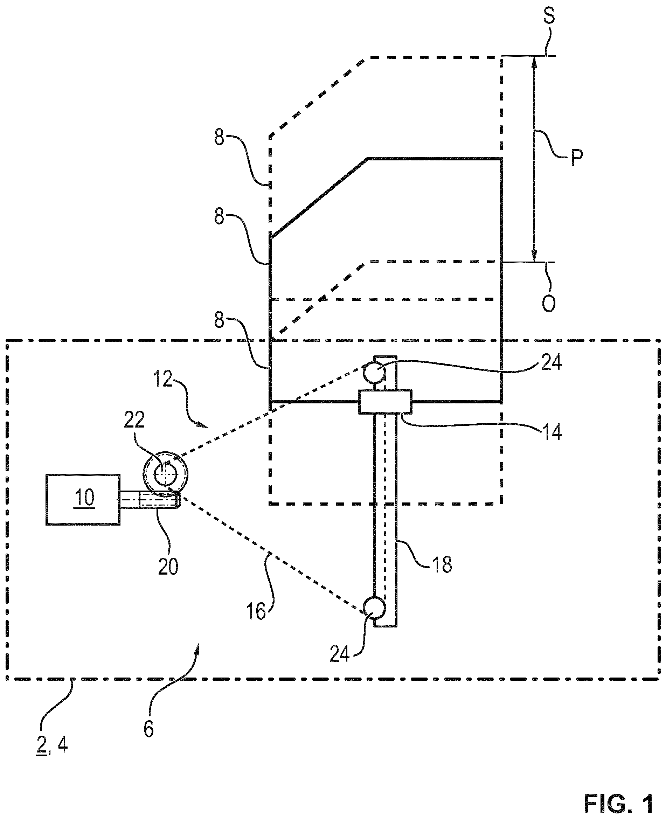

In der Fig. 1 ist in vereinfachter und schematischer Darstellung ein Türmodul 2 eines Kraftfahrzeugs gezeigt. Das Türmodul 2 ist in einer nicht näher dargestellten Seitentür des Kraftfahrzeugs verbaut. Das Türmodul 2 weist eine Trägerplatte als Türmodulträger 4 auf, auf welcher ein elektrischer (Fahrzeug-)Fensterheber 6 als Stellvorrichtung für eine (Fahrzeug-)Fensterscheibe 8 eines Kraftfahrzeugs gezeigt.

Der (Fahrzeug-)Fensterheber 6 weist einen Stellmotor 10 auf, welcher mittels einer Stellmechanik 12 und einem Schienengleiter 14 auf die Fensterscheibe 8 wirkt. In dem gezeigten Ausführungsbeispiel ist der Fensterheber 6 als ein Einstrangheber oder einstrangiger Seilzugfensterheber ausgeführt, wobei die Stellmechanik 12 einen Seilzug 16 und eine Führungsschiene 18 für den Schienengleiter 14 aufweist.

Der Stellmotor 10 des Fensterhebers 6 treibt über ein Schnecken- oder Stirnradgetriebe 20 eine Seiltrommel 22 der Stellmechanik 12 an. Ein Zugseil des Seilzugs 16 ist derart an der Seiltrommel 22 angeordnet, dass bei durch das Getriebe 20 bewirkten Drehungen der Seiltrommel 22 ein Auf- und Abwickeln des Zugseils erfolgt. Der beispielsweise als Bowdenzug ausgeführte Seilzug 16 bewegt über Umlenkrollen 24 der Führungsschiene 18 den Schienengleiter 14, und somit die Fensterscheibe 8.

Bei einer Betätigung des Stellmotors 10 wird die Fensterscheibe 8 in ihrer (Scheiben-) Position P verfahren. Die Fensterscheibe 4 ist hierbei reversibel zwischen einer Schließstellung S, welche die höchstmögliche Position P darstellt, und einer Öffnungsstellung O, welche die tiefst mögliche Position P darstellt, verfahrbar. In diesen Stellungen S und O ist die Fensterscheibe 4 in der Fig. 1 jeweils gestrichelt angedeutet. Mit durchgezogenen Linien ist die Fensterscheibe 8 dagegen in einer halbgeöffneten Zwischenstellung dargestellt.

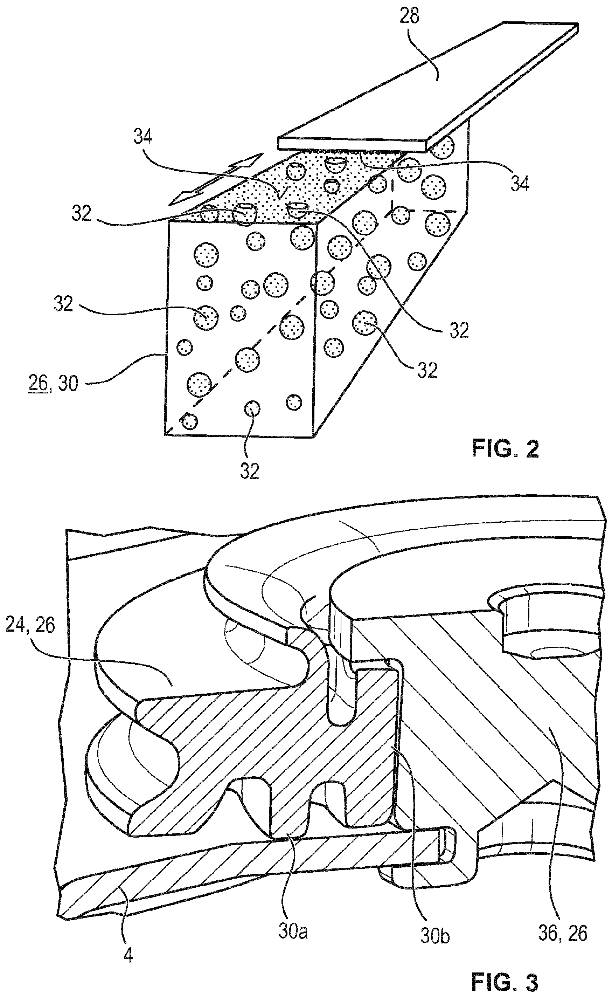

Die Komponenten oder Bauteile der Stellmechanik 12 sind hierbei als Kunststoffkomponenten oder Metallkomponenten ausgeführt. Insbesondere bei Kunststoffkomponenten, welche direkt mit Metallkomponenten in Wirkverbindung stehen ist ein erfindungsgemäßes Schmierungskonzept zur Reibungs- und Verschleißminderung integriert, welches nachfolgend anhand der Fig. 2 näher erläutert ist.

Die Fig. 2 zeigt ausschnittsweise eine Kunststoffkomponente 26 und eine Metallkomponente 28 im Bereich einer mechanischen oder reibbeanspruchten Schnittstelle. Die reibbeanspruchte Stelle der Kunststoffkomponente 26 ist nachfolgend als Anlagefläche 30 bezeichnet, wobei die Metallkomponente 28 im Zuge einer relativen Bewegung zur Kunststoffkomponente zumindest abschnittsweise einen mechanischen Berührungskontakt zur Anlagefläche 30 aufweist.

Wie in der Fig. 2 ersichtlich ist, sind im Bereich der Anlagefläche Mikrokapseln 32 in das Kunststoffmaterial der Anlagefläche 30 eingebettet, welche jeweils mit einem Schmierstoff, insbesondere einem Schmierfett oder einem Schmieröl, gefüllt sind. Vorzugsweise sind die Mikrokapseln 32 im gesamten Kunststoffmaterial der Kunststoffkomponente 26 gleichmäßig oder homogen verteilt eingebettet. Die Mikrokapseln 32 weisen beispielsweise ein Hüllmaterial auf, welches aus dem gleichen Kunststoff hergestellt ist wie die Anlagefläche 30. Die Mikrokapseln 32 sind in der Fig. 2 lediglich beispielhaft mit Bezugszeichen versehen. Der Anteil von Mikrokapseln 32 in dem Kunststoffmaterial der Anlagefläche 30 beträgt beispielsweise zwischen 1 Gew.-% und 20 Gew.-%. Die Mikrokapseln 32 sind hierbei vorzugsweise bereits in einem Kunststoffgranulat des Kunststoffmaterials eingebettet, so dass bei der Herstellung der Kunststoffkomponente 26 eine homogene Verteilung der Mikrokapseln 32 gewährleistet ist.

Die Mikrokapseln 32 sind hierbei derart ausgeführt, dass sie bei einer hinreichend hohen mechanischen Beanspruchung öffnen, und den darin eingeschlossenen Schmierstoff 34 freigeben. Die Mikrokapseln 32 können hierbei unterschiedliche Kapseleigenschaften, insbesondere unterschiedliche Größe, Form, Wanddicke etc. aufweisen, so dass die Mikrokapseln 32 bei unterschiedlichen mechanischen Beanspruchungen öffnen. Bei einer mechanischen Beanspruchung bewegen sich die Kunststoffkomponente 26 und die Metallkomponente 28 relativ gegeneinander, was in der Fig. 2 als Doppelpfeil angedeutet ist. Durch die dadurch bewirkten Reibkräfte werden die Mikrokapseln 32 an der Oberfläche der Anlagefläche 32 geöffnet, und dadurch der eingeschlossene Schmierstoff 34 freigesetzt, welcher sich in der Folge aufgrund der gegenseitigen Bewegung auf den Oberflächen der Kunststoffkomponente 26 und der Metallkomponente 28 verteilt und diese benetzt. Dadurch wird der Schmierstoff 34 beim Öffnen der Mikrokapseln 32 lokal oder punktuell an den mechanisch beanspruchten Stellen der Anlagefläche 30 freigesetzt, so dass eine zuverlässige Schmierung der Komponenten 26, 28 gewährleistet ist.

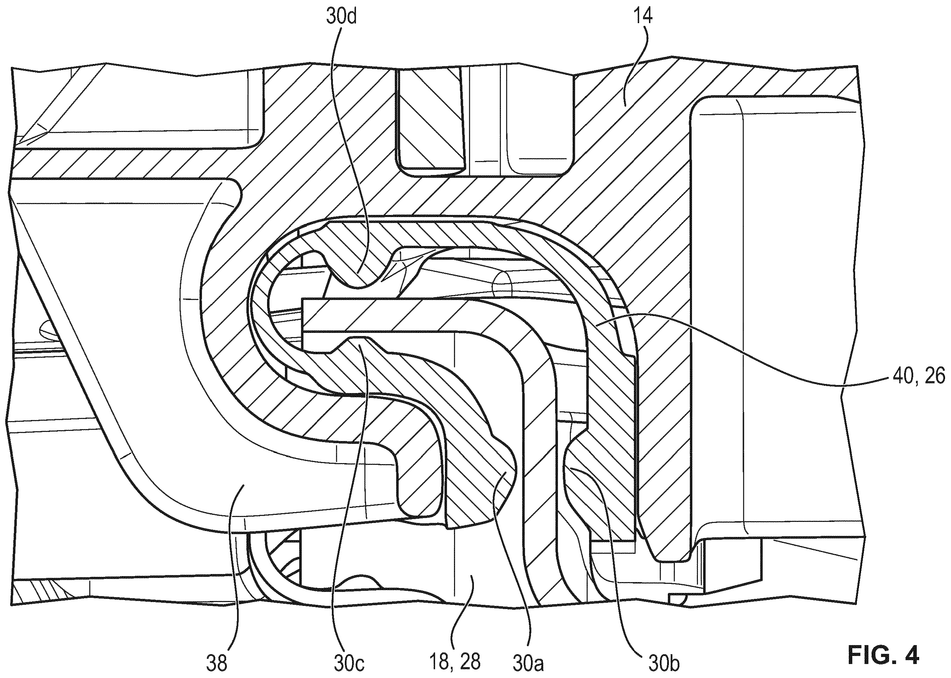

Das vorstehend erläuterte Schmierungskonzept ist bei einer Vielzahl von unterschiedlichen Kunststoff- und Metallkomponenten 26, 28 bei der Stellmechanik 12 anwendbar. Nachfolgend sind anhand der Fig. 3 und der Fig. 4 beispielhaft zwei mögliche Anwendungsbeispiele näher erläutert.

Die Fig. 3 zeigt einen Seilumlenkbereich des Fensterhebers 6. Die Umlenkung des Seilzugs 16 erfolgt mittels der Umlenkrollen 24, welche in den stirnseitigen Endbereichen der Führungsschiene 18 angeordnet sind. Die Umlenkrollen 24 sind hierbei auf Lagerstellen aufgesetzt, und an diesen drehbar oder rotierbar gelagert. Die Lagerstelle ist hierbei beispielsweise als ein (Lager-)Bolzen 36 ausgebildet, welcher an dem Türmodulträger 4 gehalten ist. Der Bolzen 36 bildet hierbei im Wesentlichen die Drehachse der Umlenkrolle 24.

In dem Ausführungsbeispiel der Fig. 3 ist Umlenkrolle 24 als ein POM-Spritzgussteil ausgeführt, wobei der Bolzen 36 aus einem Metall hergestellt ist.

Die Umlenkrolle 24 bildet somit in diesem Ausführungsbeispiel die Kunststoffkomponente 26, und der Bolzen 36 die Metallkomponente 28.

Die Umlenkrolle 24 weist hierbei eine erste Anlagefläche 30a zur Trägerplatte 4 und eine zweite Anlagefläche 30b zum Bolzen 36 auf. In die Anlageflächen 30a, 30b sind die schmierstoffgefüllten Mikrokapseln 32 eingebracht. Dadurch ist eine zuverlässige Schmierung der Schnittstellen Trägerplatte/Umlenkrolle und Umlenkrolle/Bolzen bei der Drehung der Umlenkrolle 24 gewährleistet.

Besonders vorteilhaft sind die Schmierstoff-Mikrokapseln 34 bei gleitenden Schnittstellen. Eine solche gleitende Schnittstelle ist beispielsweise zwischen dem Schienengleiter 14 und der Führungsschiene 18 realisiert. Die Anwendung des Schmierungskonzepts ist hierbei in Fig. 4 gezeigt.

Die Führungsschiene 18 weist hierbei im Querschnitt beispielsweise eine L-förmige Kontur auf. Der Schienengleiter 14 weist einen angeformten Schienenumgriff 38 für diese L-Kontur der Führungsschiene 18 auf. In den Schienenumgriff 38 ist ein einklipsbarer oder eingeklipster Gleiteinsatz 40 lösbar befestigt, welcher mit vier Anlageflächen 30a, 30b, 30c, 30d als punktuelle Laufflächen an der Führungsschiene 14 anliegt. Der Gleiteinsatz 40 ist als ein Kunststoffteil mit besonders guten Gleiteigenschaften, also mit einem möglichst geringen Reibungswiderstand bezüglich der Führung an der Führungsschiene 14, ausgeführt.

Der Schienengleiter 14 ist beispielsweise aus einem mechanisch stabilen Kunststoffmaterial ausgeführt, so dass die im Betrieb einwirkenden Stellkräfte der Stellmechanik 12 sicher und zuverlässig geführt werden. Der Schienengleiter 14 ist beispielsweise aus einem Polyamid (PA), insbesondere aus einem glasfaserverstärkten Polyamid (PA-GF), beispielsweise mit einem Glasfaseranteil von etwa 35%, ausgeführt. Der Gleiteinsatz 56 ist beispielsweise als ein POM-Spritzgussteil ausgeführt, wobei die Führungsschiene 18 aus einem Metall hergestellt ist.

In diesem Ausführungsbeispiel bildet der Gleiteinsatz 56 die Kunststoffkomponente 26 und die Führungsschiene 18 die Metallkomponente 28. Die Mikrokapseln 32 sind hierbei in jede der vier Anlageflächen 30a, 30b, 30c, 30d integriert. Die Anlageflächen 30a, 30b und 30c, 30d sind hierbei paarweise gegenüberliegend angeordnet. Die Anlageflächen 30a, 30b liegen hierbei gegenüberliegend an dem vertikalen L-Schenkel der Führungsschiene 18 an, wobei die Anlageflächen 30c, 30d gegenüberliegend an dem horizontalen L-Schenkel der Führungsschiene 18 anliegen.

Beispielsweise ist es möglich, einen Aktivator, also ein Aktivierungswerkzeug oder eine Gegenkontur der Metallkomponente 28, vorzusehen, welcher die Kunststoffkomponente 26 beziehungsweise die Anlagefläche 30 im Zuge der Montage und/oder während des Betriebs des Fensterhebers 6 bearbeitet und somit die Mikrokapseln 32 öffnet. Bei einer Anwendung gemäß Fig. 4 ist beispielsweise im Bereich eines oberen und/oder unteren Endanschlags der Führungsschiene 18 eine Gegenkontur in Form einer lokalen Oberflächenaufrauhung vorgesehen, so dass die Mikrokapseln 32 insbesondere im Bereich der Gegenkontur beziehungsweise des Endanschlags geöffnet werden.

Obwohl in der vorhergehenden Beschreibung exemplarische Ausführungen und Anwendungen erläutert wurden, sei darauf hingewiesen, dass eine Vielzahl von Abwandlungen möglich ist, ohne den Umfang der Ansprüche zu verlassen. Insbesondere ist ein derartiges erfindungsgemäßes Schmierungskonzept auch für die Seiltrommel 22 als Kunststoffkomponente und das Zugseil als Metallkomponente geeignet. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Anwendung bei den Komponenten der Stellmechanik 12, vorgenommen werden können, ohne den Schutzbereich zu verlassen, wie sich dieser aus den Ansprüchen und diesen äquivalenten Merkmalskombinationen ergibt.

### Bezugszeichenliste

- 2: Türmodul
- 4: Türmodulträger
- 6: Fensterheber
- 8: Fensterscheibe
- 10: Stellmotor
- 12: Stellmechanik
- 14: Schienengleiter
- 16: Seilzug
- 18: Führungsschiene
- 20: Schnecken-/Stirnradgetriebe
- 22: Seiltrommel
- 24: Umlenkrolle
- 26: Kunststoffkomponente
- 28: Metallkomponente
- 30, 30a, 30b, 30c, 30d: Anlagefläche
- 32: Mikrokapsel
- 34: Schmierstoff
- 36: Bolzen
- 38: Schienenumgriff
- 40: Gleiteinsatz

- P: Scheibenposition
- S: Schließstellung
- O: Offenstellung

## Patentansprüche

1. Fensterheber (6) für ein Kraftfahrzeug, aufweisend eine Kunststoffkomponente (26) und eine Metallkomponente (28), wobei die Kunststoffkomponente (26) an einer Anlagefläche (30, 30a, 30b, 30c, 30d) zumindest abschnittsweise in einem mechanischen Berührungskontakt mit der Metallkomponente (28) ist, **dadurch gekennzeichnet, dass** zumindest im Bereich der Anlagefläche (30, 30a, 30b, 30c, 30d) Mikrokapseln (32) in das Kunststoffmaterial der Kunststoffkomponente (26) eingebettet sind, welche mit einem Schmierstoff (34) gefüllt sind.

2. Fensterheber (6) nach Anspruch 1,
**dadurch gekennzeichnet,**
**dass** das Kunststoffmaterial Polypropylen, Polyoxymethylen, oder Polyamid-6 ist.

3. Fensterheber (6) nach Anspruch 1 oder 2,
**dadurch gekennzeichnet,**
**dass** der Anteil von Mikrokapseln (32) in dem Kunststoffmaterial der Anlagefläche (30, 30a, 30b, 30c, 30d) zwischen 1 Gewichtsprozent und 20 Gewichtsprozent beträgt.

4. Fensterheber (6) nach einem der Ansprüche 1 bis 3,
**dadurch gekennzeichnet,**
**dass** die Mikrokapseln (32) aus dem Kunststoffmaterial hergestellt sind.

5. Fensterheber (6) nach einem der Ansprüche 1 bis 4,
**dadurch gekennzeichnet,**
**dass** die Kunststoffkomponente (26) ein Gleiteinsatz (40) eines Schienenumgriffs (38) eines Schienengleiters (14) ist, und dass die Metallkomponente (28) eine Führungsschiene (14) ist, welche abschnittsweise von dem Schienenumgriff (38) abschnittsweise umgriffen ist.

6. Fensterheber (6) nach einem der Ansprüche 1 bis 4,
**dadurch gekennzeichnet,**
**dass** die Kunststoffkomponente (26) eine Umlenkrolle (24) ist, und dass die Metallkomponente (28) ein die Umlenkrolle (24) lagernder Bolzen (36) ist.

7. Fensterheber (6) nach einem der Ansprüche 1 bis 4,
**dadurch gekennzeichnet,**
**dass** die Kunststoffkomponente (26) eine Seiltrommel (22) ist, und dass die Metallkomponente (28) ein darauf aufwickelbares Seil ist.

8. Fensterheber (6) nach einem der Ansprüche 1 bis 7,
**dadurch gekennzeichnet,**
**dass** die Mikrokapseln (32) in dem gesamten Kunststoffmaterial der Kunststoffkomponente (26) verteilt angeordnet sind.

9. Fensterheber (6) nach Anspruch 8,
**dadurch gekennzeichnet,**
**dass** die Mikrokapseln (32) in dem Kunststoffmaterial möglichst homogen verteilt sind.

10. Fensterheber (6) nach einem der Ansprüche 1 bis 9,
**dadurch gekennzeichnet,**
**dass** Mikrokapseln (32) mit unterschiedlicher Form und/oder Durchmesser und/oder Wandstärke in das Kunststoffmaterial eingebettet sind.

11. Fensterheber (6) nach einem der Ansprüche 1 bis 10,
**dadurch gekennzeichnet,**
**dass** die Anlagefläche (30, 30a, 30b, 30c, 30d) im Zuge einer Montage mit einem Aktivierungswerkzeug derart bearbeitet ist, dass zumindest ein Teil der Mikrokapseln (32) geöffnet und Schmierstoff (34) auf der Anlagefläche (30, 30a, 30b, 30c, 30d) freigesetzt ist.

12. Fensterheber (6) nach einem der Ansprüche 1 bis 11,
**dadurch gekennzeichnet,**
**dass** die Metallkomponente (28) eine Gegenkontur zum gezielten Freisetzen des Schmierstoffs (34) aufweist.

13. Türmodul (2) für ein Kraftfahrzeug, aufweisend einen Türmodulträger (4) und einen darauf angeordneten Fensterheber (6) nach einem der Ansprüche 1 bis 12.

14. Verwendung von Mikrokapseln in einem Kunststoffgranulat zur Herstellung einer Kunststoffkomponente (26) für einen Fensterheber (6) nach einem der Ansprüche 1 bis 12.

## Claims

1. Window lifter (6) for a motor vehicle, comprising a plastics component (26) and a metal component (28), wherein the plastics component (26) is at least partially in mechanical touching contact with the metal component (28) on a contact surface (30, 30a, 30b, 30c, 30d), **characterized in that** microcapsules (32) filled with a lubricant (34) are embedded in the plastics material of the plastics component (26) at least in the region of the contact surface (30, 30a, 30b, 30c, 30d).

2. Window lifter (6) according to Claim 1,
**characterized**
**in that** the plastics material is polypropylene, polyoxymethylene, or polyamide-6.

3. Window lifter (6) according to Claim 1 or 2,
**characterized**
**in that** the proportion of microcapsules (32) in the plastics material of the contact surface (30, 30a, 30b, 30c, 30d) is between 1 weight per cent and 20 weight per cent.

4. Window lifter (6) according to one of Claims 1 to 3,
**characterized**
**in that** the microcapsules (32) are made of the plastics material.

5. Window lifter (6) according to one of Claims 1 to 4,
**characterized**
**in that** the plastics component (26) is a sliding insert (40) of a rail wraparound means (38) of a rail slider (14), and in that the metal component (28) is a guide rail (14), around which the rail wraparound means (38) at least partially engages.

6. Window lifter (6) according to one of Claims 1 to 4,
**characterized**
**in that** the plastics component (26) is a deflection roller (24), and in that the metal component (28) is a bolt (36) which mounts the deflection roller (24).

7. Window lifter (6) according to one of Claims 1 to 4,
**characterized**
**in that** the plastics component (26) is a cable drum (22), and in that the metal component (28) is a cable that can be wound up thereon.

8. Window lifter (6) according to one of Claims 1 to 7,
**characterized**
**in that** the microcapsules (32) are distributed throughout the plastics material of the plastics component (26).

9. Window lifter (6) according to Claim 8,
**characterized**
**in that** the microcapsules (32) are as far as possible homogeneously distributed in the plastics material.

10. Window lifter (6) according to one of Claims 1 to 9,
**characterized**
**in that** microcapsules (32) with different shapes and/or diameters and/or wall thicknesses are embedded in the plastics material.

11. Window lifter (6) according to one of Claims 1 to 10,
**characterized**
**in that** the contact surface (30, 30a, 30b, 30c, 30d) is worked by an activation tool in the course of mounting in such a way that at least some of the microcapsules (32) are made to open and release lubricant (34) on the contact surface (30, 30a, 30b, 30c, 30d).

12. Window lifter (6) according to one of Claims 1 to 11,
**characterized**
**in that** the metal component (28) has a mating contour for selective release of the lubricant (34).

13. Door module (2) for a motor vehicle, comprising a door module carrier (4) and a window lifter (6) according to one of Claims 1 to 12 arranged thereon.

14. Use of microcapsules in a granulated plastic for producing a plastics component (26) for a window lifter (6) according to one of Claims 1 to 12.

## Revendications

1. Lève-vitre (6) pour un véhicule à moteur, comportant un composant en matière plastique (26) et un composant en métal (28), le composant en matière plastique (26) étant au moins par endroits en contact mécanique avec le composant en métal (28) sur une surface d'appui (30, 30a, 30b, 30c, 30d), **caractérisé en ce que** sont incorporées, dans le matériau en matière plastique du composant en matière plastique (26), au moins dans la zone de la surface d'appui (30, 30a, 30b, 30c, 30d), des microcapsules (32) qui sont remplies d'un lubrifiant (34).

2. Lève-vitre (6) selon la revendication 1,
**caractérisé en ce**
**que** le matériau en matière plastique est du polypropylène, du polyoxyméthylène ou du polyamide 6.

3. Lève-vitre (6) selon la revendication 1 ou 2,
**caractérisé en ce**
**que** la proportion de microcapsules (32) dans le matériau en matière plastique de la surface d'appui (30, 30a, 30b, 30c, 30d) est comprise entre 1 % en poids et 20 % en poids.

4. Lève-vitre (6) selon l'une quelconque des revendications 1 à 3,
**caractérisé en ce**
**que** les microcapsules (32) sont fabriquées à partir du matériau en matière plastique.

5. Lève-vitre (6) selon l'une quelconque des revendications 1 à 4,
**caractérisé en ce**
**que** le composant en matière plastique (26) est un insert de coulissement (40) d'un moyen entourant le rail (38) d'une glissière de rail (14), et que le composant en métal (28) est un rail de guidage (14), qui est entouré au moins par endroits par le moyen entourant le rail (38).

6. Lève-vitre (6) selon l'une quelconque des revendications 1 à 4,
**caractérisé en ce**
**que** le composant en matière plastique (26) est une poulie de renvoi (24), et que le composant en métal (28) est un boulon (36) supportant la poulie de renvoi (24).

7. Lève-vitre (6) selon l'une quelconque des revendications 1 à 4,
**caractérisé en ce**
**que** le composant en matière plastique (26) est un tambour à câble (22), et que le composant en métal (28) est un câble pouvant être enroulé sur celui-ci.

8. Lève-vitre (6) selon l'une quelconque des revendications 1 à 7,
**caractérisé en ce**
**que** les microcapsules (32) sont disposées de manière répartie dans la totalité du matériau en matière plastique du composant en matière plastique (26).

9. Lève-vitre (6) selon la revendication 8,
**caractérisé en ce**
**que** les microcapsules (32) sont réparties dans la mesure du possible de manière homogène dans le matériau en matière plastique.

10. Lève-vitre (6) selon l'une quelconque des revendications 1 à 9,
**caractérisé en ce**
**que** les microcapsules (32) avec une forme et/ou un diamètre et/ou une épaisseur de paroi différents sont incorporées dans le matériau en matière plastique.

11. Lève-vitre (6) selon l'une quelconque des revendications 1 à 10,
**caractérisé en ce**
**que** la surface d'appui (30, 30a, 30b, 30c, 30d) est usinée avec un outil d'activation dans le cadre d'un montage de telle manière qu'au moins une partie des microcapsules (32) est ouverte et du lubrifiant (34) est libéré sur la surface d'appui (30, 30a, 30b, 30c, 30d).

12. Lève-vitre (6) selon l'une quelconque des revendications 1 à 11,
**caractérisé en ce**
**que** le composant en métal (28) comporte un contre-contour pour libérer de manière ciblée le lubrifiant (34).

13. Module de porte (2) pour un véhicule à moteur, comportant un support de module de porte (4) et un lève-vitre (6) selon l'une quelconque des revendications 1 à 12 disposé sur celui-ci.

14. Utilisation de microcapsules dans un granulat de matière plastique pour fabriquer un composant en matière plastique (26) pour un lève-vitre (6) selon l'une quelconque des revendications 1 à 12.
